# EUROPÄISCHE PATENTSCHRIFT

(11) **EP 0 807 328 B1**
(45) Veröffentlichungstag und Bekanntmachung des Hinweises auf die Patenterteilung: **21.10.1998**
(21) Anmeldenummer: 96902972.7
(22) Anmeldetag: 31.01.1996
(51) Int. Cl.: H02G 5/00

(54) **STROMSAMMELSCHIENE**
POWER BUS BAR
BUS D'ALIMENTATION

(30) Priorität: 03.02.1995 DE 19503560
(43) Veröffentlichungstag der Anmeldung: 19.11.1997
(73) Patentinhaber: Rittal-Werk Rudolf Loh GmbH & Co. KG, 35745 Herborn (DE)
(72) Erfinder: WAGENER, Hans, D-35716 Dietzhölztal 2 (DE)
(74) Vertreter: Fleck, Hermann-Josef, Dr.-Ing.
(86) Internationale Anmeldenummer: EP9600423
(87) Internationale Veröffentlichungsnummer: WO9624184

(56) Entgegenhaltungen:
- DE-A- 3 921 665
- FR-A- 2 010 347
- US-A- 4 030 794

## Beschreibung

Die Erfindung betrifft eine Stromsammelschiene für Sammelschienensysteme, die mittels Halter an Befestigungsflächen befestigbar ist, an der Anschlußgeräte, wie Adapter, Sicherungselemente, Schalter, Klemmen und dgl., anbringbar sind und die einen im wesentlichen quadratischen Querschnitt mit hinterschnittenen längsgerichteten Aufnahmen in allen Außenseiten aufweist.

Die gängigsten bekannten Stromsammelschienen haben rechteckförmigen Querschnitt und werden von Haltern aus Kunststoff im Abstand zueinander gehalten. Dabei kann die Stromsammelschiene liegend oder stehend in den Haltern festgelegt sein. Bei dem liegenden Einbau in die Halter werden die Anschlußgeräte in der Regel mit hakenförmigen Anschlußkontakten an der Stromsammelschiene festgelegt. Ist der Einbau der Stromsammelschienen in den Haltern stehend, dann werden die Anschlußgeräte mit messerartigen Anschlußkontakten auf die Stromsammelschiene aufgesteckt und zusätzlich mechanisch gehalten.

Diese Stromsammelschienen sind im Querschnitt begrenzt, da die Anschlußgeräte auf eine Anschlußart ausgelegt sind. Werden die Stromsammelschienen mit großem Querschnitt, wie er für hohe Stromstärken erforderlich ist, ausgelegt, dann können eine Vielzahl von Anschlußgeräten nicht mehr auf einfache Weise an der Stromsammelschiene angebracht werden.

Bei einer in der US-A 4,030,794 angegebenen Stromsammelschiene der genannten Art mit quadratischem Querschnitt ist das Mittelteil hohl ausgebildet, und die seitlichen Wandelemente sind relativ dünn. In jeder Außenseite sind zwei außermittig angeordnete T-förmige Aufnahmen vorgesehen. Außerdem ist in dieser Druckschrift eine massive Stromsammelschiene rechteckförmigen Querschnitts wiedergegeben, in deren großen flachen Seiten jeweils mehrere längsverlaufende Nuten unterschiedlicher Querschnittsform eingebracht sind. Die T-förmigen Nuten sind neben dem Mittelteil angeordnet und liegen sich unter Bildung einer relativ dünnen Wandung gegenüber.

In der DE-A 3 921 665 ist eine weitere Stromsammelschiene mit der Querschnittskontur eines unregelmäßigen Vielecks gezeigt. In die Außenseiten sind unterschiedlich viele Nuten eingebracht. In der Beschreibung ist ausgeführt, daß Teilquerschnitte mit einer verhältnismäßig großen Fläche gebildet sind.

Es ist Aufgabe der Erfindung, eine Stromsammelschiene der eingangs erwähnten Art zu schaffen, die für große Stromstärken mit ausreichend großem Querschnitt ausgelegt werden kann, ohne die Anbringung von Haltern und Anschlußgeräten zu erschweren oder einzuschränken.

Diese Aufgabe wird nach der Erfindung dadurch gelöst, daß pro Außenseite nur eine Aufnahme mittig vorgesehen ist und daß die Aufnahmen ein im wesentlichen quadratisches, ausgefülltes Mittelteil umschließen, dessen Querschnitt an die gewünschte Stromstärke angepaßt ist.

Mit dem quadratischen Querschnitt sind vier gleiche Anschlußseiten für die Stromsammelschiene geschaffen. Der umschlossene Querschnitt kann auch für sehr hohe Stromstärken ausgelegt werden. Die Aufnahmen in den Außenseiten sind durchgehend, so daß an beliebiger Stelle der Längsabmessung der Stromsammelschiene Halter oder Anschlußgeräte angebracht werden können. Wird eine Seite der Stromsammelschiene parallel zur Befestigungsfläche ausgerichtet, dann verbleiben drei Außenseiten für die Anbringung von Anschlußgeräten frei. Die Anschlußgeräte sind mit ihren Anschlußkontakten auf die Aufnahmen in der Stromsammelschiene abgestimmt oder sie sind über getrennte Kontaktstücke mit der Stromsammelschiene verbindbar.

Die Anbringung von Haltern und Anschlußgeräten an der Stromsammelschiene wird dadurch erleichtert, daß die Aufnahmen als hinterschnittene Nuten ausgebildet sind. Durch die hinterschnittene Aufnahme läßt sich ein Befestigungs- oder Anschlußteil auf einfache Weise an der Stromsammelschiene festlegen. Dabei kann die Auslegung so sein, daß die Aufnahmen als Schwalbenschwanznuten ausgebildet sind, oder daß die Aufnahmen als T-Nuten ausgebildet sind.

Die Stromsammelschiene wrist im wesentlichen quadratischen Querschnitt auf. Die Stromsammel schiene ist mit ihren Aufnahmen als Abschnitt eines Strangpreßprofiles hergestellt.

Die Anpassung der Stromsammelschiene auf bestimmte, für sehr hohe Ströme erforderliche Querschnitte wird bei einer Ausgestaltung dadurch vereinfacht, daß sie als Abschnitt eines Strangpreßprofils hergestellt ist. Der Querschnitt des Mittelteils kann leicht und schnell ermittelt werden. Die die Aufnahmen umgebenden Querschnittsbereiche der Stromsammelschiene sind dabei als Sicherheitsreserve vorhanden.

Die Erfindung wird anhand eines im Querschnitt dargestellten Ausführungsbeispiels einer Stromsammelschiene mit vier Außenseiten näher erläutert.

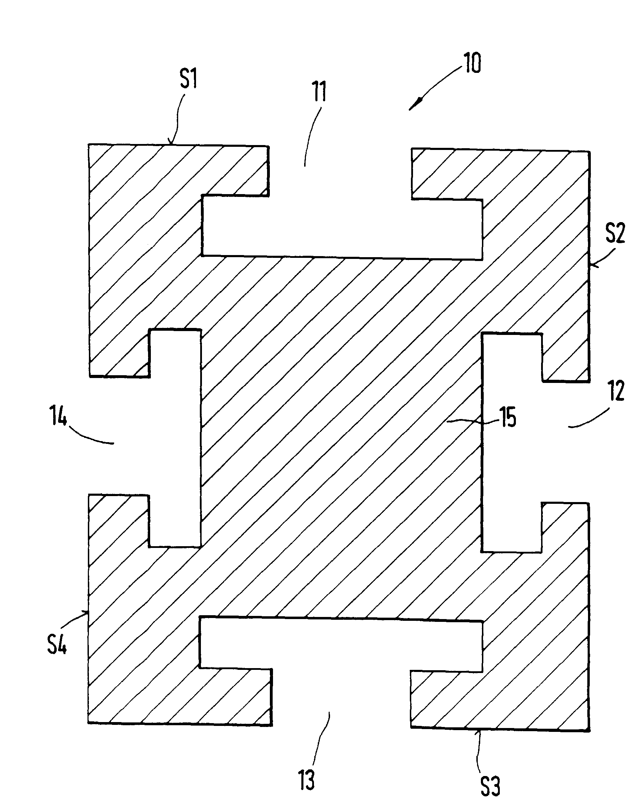

Die in der Zeichnung dargestellte Stromsammelschiene 10 ist vorzugsweise als Abschnitt aus einem Strangpreßprofil hergestellt, da die in die Außenseiten S1, S2, S3 und S4 eingebrachten, durchgehenden Aufnahmen 11,12, 13 und 14 mit dem Mittelteil 15 in einem Arbeitsgang hergestellt werden können. Selbstverständlich kann die Stromsammelschiene 10 auch auf andere Art und Weise hergestellt werden. Es ist nur darauf zu achten, daß ein elektrisch gut leitendes Metall, wie z.B. Kupfer, verwendet wird.

Die Stromsammelschiene 10 des Ausführungsbeispiels ist im Querschnitt im wesentlichen rechteckförmig. Sie kann jedoch auch mit quadratischem Querschnitt ausgebildet sein. Die durchgehenden Aufnahmen 11,12, 13 und 14 sind vorzugsweise mit Hinterschnitt ausgebildet, da dies die Anbringung von Haltern und Anschlußgeräten erleichtert. So können Halter und Anschlußgeräte mit Befestigungsteilen oder Anschlußkontakten in den Aufnahmen 11,12, 13 und 14 festgelegt werden, wobei mittels einer Feststellschraube die axiale Stellung des Halters oder des Anschlußgerätes an der Stromsammelschiene 10 fixiert werden. Die Aufnahmen 11,12, 13 und 14 sind bei der Stromsammelschiene 10 des Ausführungsbeispiels als T-Nuten ausgebildet, die sich besonders für eine schnelle und einfache Anbringung von Haltern und Anschlußgeräten eignen. Die Aufnahmen 11,12, 13 und 14 begrenzen ein rechteckförmiges Mittelteil 15, das sich auf einfache Art zur Bemessung der Stromsammelschiene 10 für eine vorgegebene maximale Stromstärke eignet.

Die Aufnahmen 11,12, 13 und 14 können auch unterschiedlich sein, z.B. andere Form oder anderen Querschnitt aufweisen.

## Patentansprüche

1. Stromsammelschiene (10) für Sammelschienensysteme, die mittels Halter an Befestigungsflächen befestigbar ist, an der Anschlußgeräte, wie Adapter, Sicherungselemente, Schalter, Klemmen und dgl., anbringbar sind und die einen im wesentlichen quadratischen Querschnitt mit hinterschnittenen längsgerichteten Aufnahmen (11,12, 13,14) in allen Außenseiten (S1, S2, S3, S4) aufweist,
dadurch gekennzeichnet,
daß pro Außenseite (S1, S2, S3, S4) nur eine Aufnahme (11,12, 13,14) mittig vorgesehen ist und
daß die Aufnahmen (11,12, 13,14) ein im wesentlichen quadratisches, ausgefülltes Mittelteil (15) umschließen, dessen Querschnitt an die gewünschte Stromstärke angepaßt ist.

2. Stromsammelschiene nach Anspruch 1,
dadurch gekennzeichnet,
daß die hinterschnittenen Aufnahmen (11,12, 13,14) als Schwalbenschwanznut oder T-Nut ausgebildet sind.

3. Stromsammelschiene nach Anspruch 2,
dadurch gekennzeichnet,
daß die Aufnahmen (11,12, 13,14) in den Außenseiten (S1, S2, S3, S4) unterschiedliche Form und/oder Größe aufweisen.

## Claims

1. Bus bar (10) for bus bar systems, which is securable on mounting faces by means of holders, and on which connection equipment, such as adapters, fuse elements, switches, terminals and the like, can be mounted, and which bus bar has a substantially square cross-section with undercut, longitudinally orientated receivers (11,12, 13,14) in all of the external surfaces (S1, S2, S3, S4), characterised in that only one receiver (11,12 13,14) is centrally provided per external surface (S1, S2, S3, S4), and in that the receivers (11,12 13,14) surround a substantially square, filled-in central portion (15), the cross-section of which is adapted to the desired current intensity.

2. Bus bar according to claim 1, characterised in that the undercut receivers (11,12 13,14) are configured as a dovetail groove or as a T-shaped groove.

3. Bus bar according to claim 2, characterised in that the receivers (11,12, 13,14) in the external surfaces (S1, S2, S3, S4) have a variable configuration and/or size.

## Revendications

1. Bus d'alimentation (10) pour jeu de barres d'omnibus, qui peut au moyen de supports être fixé à des surfaces de fixation, et auquel peuvent être connectés des appareillages, tels que des adaptateurs, des éléments de sécurité, des commutateurs, des bornes et similaires, et qui présente une section transversale sensiblement quadrangulaire ou carrée avec des récepteurs en dépouille (11, 12, 13, 14) dans tous les côtés extérieurs (S1, S2, S3, S4)
caractérisé
en ce que pour chaque côté extérieur (S1, S2, S3, S4) il est prévu centralement un seul récepteur (11, 12, 13, 14), et
en ce que les récepteurs (11, 12, 13, 13) ceignent une pièce centrale pleine sensiblement carrée (15), dont la section transversale est adaptée à l'intensité de courant désirée.

2. Bus d'alimentation suivant la revendication 1,
caractérisé
en ce que les récepteurs en dépouille (11, 12, 13, 14) ont la forme d'une encoche en queue d'aronde ou en forme de T.

3. Bus d'alimentation suivant la revendication 2,
caractérisé
en ce que les récepteurs (11, 12, 13, 14) dans les côtés extérieurs (S1, S2, S3, S4) présentent des formes et/ou des dimensions variables.
